# EUROPÄISCHE PATENTSCHRIFT

(11) **EP 3 477 127 B1**
(45) Veröffentlichungstag und Bekanntmachung des Hinweises auf die Patenterteilung: **24.11.2021**
(21) Anmeldenummer: 18200567.8
(22) Anmeldetag: 16.10.2018
(51) Int. Cl.: F16B 25/00

(54) **SCHRAUBE ZUM EINSCHRAUBEN IN EIN BOHRLOCH**
SCREW FOR SCREWING INTO A HOLE
VIS DESTINÉE À ÊTRE VISSÉE DANS UN TROU DE FORAGE

(30) Priorität: 25.10.2017 DE 102017219160
(43) Veröffentlichungstag der Anmeldung: 01.05.2019
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-A1- 3 135 927
- DE-A1-102005 041 586

## Beschreibung

Die vorliegende Patentanmeldung nimmt die Priorität der deutschen Patentanmeldung DE 10 2017 219 160.0 in Anspruch.

Die Erfindung betrifft eine Schraube zum Einschrauben in ein Bohrloch sowie eine Anordnung mit einer derartigen, in einem Bohrloch einge-schraubten Schraube.

EP 3 135 927 A1 offenbart eine Betonschraube mit einem Schneidgewinde. Zur Erhöhung der Schneidleistung sind an dem Schneidgewinde Schneidelemente vorgesehen. Die Schneidelemente sind gegenüber der Mantelfläche des Schneidgewindes erhaben ausgeführt. Die Schneidelemente bewirken einen Widerstand bei Eindrehen der Schraube. Das Eindrehmoment ist, insbesondere bei großer Einschraublänge, hoch.

DE 10 2005 041 586 A1 offenbart eine gewindefurchende Schraube, bei dem ein Gewinde über seine gesamte axiale Länge mit abstehenden Vorsprüngen versehen ist.

Der Erfindung liegt die Aufgabe zugrunde, eine Schraube zum Einschrauben in ein Bohrloch derart zu verbessern, dass bei unveränderter Schneidleistung das Eindrehmoment reduziert ist.

Diese Aufgabe wird durch die Merkmale der Ansprüche 1 und 12 gelöst. Der Kern der Erfindung besteht darin, dass eine Schraube mit einem Schneidgewinde einen daran vorstehenden Schneidvorsprung aufweist, der unsymmetrisch ausgeführt ist. Die Schraube weist mindestens einen Schneidvorsprung auf. Es können auch mehrere, insbesondere mindestens zwei, insbesondere mindestens vier, insbesondere mindestens sechs, insbesondere mindestens acht, insbesondere mindestens zehn und insbesondere mindestens zwölf Schneidvorsprünge an der Schraube vorgesehen sein. Das Schneidgewinde erstreckt sich von einem Einführende der Schraube als Schraubenlinie, also als Helix, am Kern der Schraube. Der Schneidvorsprung ist bezüglich der Schraubenlinie unsymmetrisch ausgeführt. Ein unterer Volumenanteil des mindestens einen Schneidvorsprungs ist größer als ein oberer Volumenanteil des Schneidvorsprungs. Der untere Volumenanteil ist an einer unteren Schneidflanke des Schneidgewindes angeordnet. Die untere Schneidflanke ist dem Einführende der Schraube zugewandt. Der obere Volumenanteil ist an einer oberen Schneidflanke angeordnet, die dem Einführende abgewandt ist. Überraschend wurde gefunden, dass der Schneidvorsprung, insbesondere der untere Volumenanteil des Schneidvorsprungs, besonders massiv ausgeführt sein kann und damit anders als bei dem Schneidelement gemäß der EP 3 135 927 A1, das symmetrisch an den Gewindeflanken des Schneidgewindes angeordnet ist. Die Schneidleistung der erfindungsgemäßen Schraube ist verbessert. Die Schraube ist zum Einschrauben in ein Bohrloch in einem harten und/oder porösen Material, insbesondere Beton, geeignet. Die Schraube ist insbesondere eine Betonschraube. Der mindestens eine Schneidvorsprung ist geeignet, massive Zuschlagstoffe im Material, insbesondere im Beton, durch die pulsierende Drehbewegung beim Einschrauben der Schraube abzumeißeln. Im Material liegende Armierungen, insbesondere Stahlarmierungen, werden mittels des Schneidvorsprungs abgehobelt. Die Schraube kann bei erhöhter Schneidleistung mit reduziertem Eindrehmoment eingeschraubt werden. Insbesondere weist der Schneidvorsprung, insbesondere der untere Volumenanteil, eine erhöhte Oberflächenhärte auf, die insbesondere mindestens 57 HRC beträgt. Um eine erhöhte Härte und damit Verschleißfestigkeit der Schneidvorsprünge zu schaffen, können die Schneidvorsprünge gehärtet, insbesondere induktiv gehärtet sein. Eine lokale Härtung der Schneidvorsprünge kann auch durch eine Laserstrahlbearbeitung, also Laserstrahlhärten, erfolgen. Die Härte beträgt insbesondere mindestens 60 HRC, insbesondere mindestens 62 HRC, insbesondere mindestens 64 HRC und insbesondere höchstens 65 HRC. Dadurch, dass die Schneidvorsprünge eine Härte von mindestens 57 HRC aufweisen, ist gewährleistet, dass das Einschneiden des Schneidgewindes in den Beton gewährleistet ist. Dadurch, dass die Härte der Schneidvorsprünge höchstens 65 HRC beträgt, ist gewährleistet, dass das Grundmaterial der Schraube, also der Kern, nicht versprödet. Der Kern der Schraube bleibt elastisch. Die Belastung der Schraube, insbesondere des Kerns, während des Einschraubens ist unproblematisch. Insbesondere ist ein Brechen, insbesondere ein Abreißen, der Schraube im Bereich des Kerns aufgrund der Einschraubbelastung ausgeschlossen.

Überraschend wurde gefunden, dass die Schneidflanken, insbesondere die untere Schneidflanke, des Schneidgewindes durch den Schneidvorsprung zusätzlich am Kern der Schraube abgestützt sind. Das Schneidgewinde weist eine erhöhte Steifigkeit und Stabilität auf. Das Risiko eines unbeabsichtigten Biegens des Schneidgewindes ist reduziert. Die Abnutzung des Schneidgewindes ist dadurch reduziert. Der Reibwiderstand beim Eindrehen, also das Eindrehmoment, ist zusätzlich reduziert. Das Volumenverhältnis des unteren Volumenanteils zu dem oberen Volumenanteil beträgt mindestens 1,5:1, mindestens 2:1, insbesondere mindestens 2,5:1, insbesondere mindestens 3:1, insbesondere mindestens 5:1, insbesondere mindestens 8:1, insbesondere mindestens 10:1 und insbesondere mindestens 20:1. Der Schneidvorsprung ist insbesondere einstückig am Schneidgewinde angeformt. Der Schneidvorsprung wird beispielsweise am Schneidgewinde in einem Walzprozess aufgewalzt. Alternativ kann der Schneidvorsprung am Schneidgewinde nachträglich, beispielsweise als Schweißpunkt, aufgebracht werden. Mittels eines nachträglichen Bearbeitungsverfahrens kann die Geometrie und/oder die Oberflächenbeschaffenheit, insbesondere die Härte, des Schweißpunkts für den nachträglich angebrachten Schneidvorsprung gezielt eingestellt werden.

Ein Schneidvorsprung-Durchmesser gemäß Anspruch 2 gewährleistet eine verbesserte Schneidwirkung, indem die Schneidvorsprünge in radialer Richtung bezogen auf die Mittellängsachse der Schraube vorstehen.

Ein Einführabschnitt des Schneidgewindes gemäß Anspruch 3 erleichtert das Einführen der Schraube in das Bohrloch. Insbesondere ist der Kern-Durchmesser der Schraube im Bereich des Einführendes reduziert. Insbesondere ist die Schraube im Bereich des Einführendes konisch ausgeführt. Vorteilhaft ist es, wenn das Schneidgewinde im Einführabschnitt einen reduzierten Schneidgewinde-Durchmesser aufweist, der von einem Start-Durchmesser, der insbesondere dem Kern-Durchmesser entspricht, auf den Schneidgewinde-Durchmesser ansteigt. Insbesondere ist der Anstieg des reduzierten Schneidgewinde-Durchmessers entlang des Einführabschnitts linear. Der Anstieg kann auch degressiv oder progressiv sein. Der Einführabschnitt des Schneidgewindes erstreckt sich insbesondere über 50% der Schraubenlinie, also entlang des halben Umfangs der Schraube. Die volle Gewindehöhe des Schneidgewindes ist nach einer halben Umdrehung der Schraube erreicht. Ein Taumeln der Schraube beim Eindrehen in das Bohrloch ist vermieden.

Ein Einführabschnitt-Schneidvorsprung gemäß Anspruch 4 gewährleistet ein leichtes Vorschneiden beim Eindrehen der Schraube. Die Schneidvorsprünge, die sich dem Einführabschnitt am Schneidgewinde anschließen, sind dadurch entlastet. Die Schneidvorsprünge am Schneidgewinde müssen nicht die vollständige Schneidleistung erbringen. Die Abnutzung der Schneidkanten der nachfolgenden Schneidvorsprünge ist reduziert.

Eine konstante Schneidvorsprunghöhe entlang der Schraubenlinie gemäß Anspruch 5 gewährleistet eine konstante Schneidleistung für den Schneidvorsprung.

Alternativ kann gemäß Anspruch 6 eine entlang der Schraubenlinie veränderliche Schneidvorsprunghöhe vorgesehen sein, um bei einer Belastung der Schneidkante des Schneidvorsprungs und dem dadurch entstehenden Abtrag ein automatisches Nachschärfen des Schneidvorsprungs zu gewährleisten.

Eine Schneidvorsprunghöhe gemäß Anspruch 7 ermöglicht eine verbesserte Schneidleistung. Die Schneidvorsprunghöhe in radialer Richtung bezogen auf die Mittellängsachse ist im Wesentlichen konstant. Ein Schneidkanten-Winkel ist insbesondere kleiner oder gleich 90°. Der Schneidkanten-Winkel kann auch kleiner sein als 90°, sodass die Schneidvorsprunghöhe mit radialem Abstand zur Mittellängsachse abnimmt.

Eine nicht erfindungsgemäße Anordnung des Schneidvorsprungs ausschließlich an der unteren Schneidflanke gewährleistet eine verbesserte Zugbelastung der Schraube im Bohrloch. Der obere Volumenanteil ist im Wesentlichen nicht vorgesehen und insbesondere gleich 0. Das bedeutet, dass an der oberen Schneidflanke kein Schneidvorsprung vorgesehen ist. Wenn der Schneidvorsprung als Schweißpunkt und nachträgliche Oberflächenbearbeitung hergestellt worden ist, ist denkbar, dass ein kleiner, unbeabsichtigter und insbesondere unerheblicher Volumenanteil an der oberen Schneidflanke verbleibt. Dieser unerwünschte obere Volumenanteil konnte beispielsweise mit der nachträglichen Oberflächenbearbeitung des Schweißpunktes nicht vollständig entfernt werden. Ein derart unbeachtlicher oberer Volumenanteil ist vernachlässigbar. Der obere Volumenanteil ist insbesondere dann vernachlässigbar, wenn der obere Volumenanteil höchstens 10% des unteren Volumenanteils, insbesondere höchstens 5% des unteren Volumenanteils und insbesondere höchstens 1% des unteren Volumenanteils beträgt. Beim Eindrehen der Schraube bleibt die Betonkonsole, also die in das Bohrloch eingeschnittene Gewindewendel, unversehrt. Bei einer Zugbelastung der Schraube im Bohrloch liegt die Schraube flächig mit dem Schneidgewinde und/oder einem Traggewinde an der unversehrten Gewindewendel auf, insbesondere gegenüber der Betonschraube der EP 3 135 927 A1, bei der die Gewindewendel durch die Schneidelemente unterbrochen ist, ist die Auszugskraft erhöht.

Ein Schneidvorsprung gemäß Anspruch 10 oder 11 ermöglicht eine erhöhte Schneidleistung bei reduziertem Einschraubmoment.

Eine Anordnung gemäß Anspruch 12 weist im Wesentlichen die Vorteile der Schraube selbst auf, worauf hiermit verwiesen wird.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:
- Fig. 1: einen Längsschnitt einer Anordnung mit einer in einem Bohrloch eingeschraubten Schraube mit einem quaderförmigen Schneidvorsprung gemäß einer nicht erfindungsgemäßen Ausführungsform,
- Fig. 2: eine Seitenansicht der Schraube gemäß Fig. 1,
- Fig. 3: eine vergrößerte Schnittansicht gemäß Schnittlinie III-III in Fig. 2,
- Fig. 4: eine Fig. 2 entsprechende Seitenansicht einer Schraube mit einem keilförmigen Schneidvorsprung gemäß einer nicht erfindungsgemäßen Ausführungsform,
- Fig. 5: eine Fig. 2 entsprechende Ansicht einer Schraube mit einem gekrümmten Schneidvorsprung gemäß einer nicht erfindungsgemäßen Ausführungsform,
- Fig. 6: eine Fig. 2 entsprechende Ansicht einer Schraube mit einem als Schweißpunkt ausgeführten Schneidvorsprung gemäß einem erfindungsgemäßen Ausführungsbeispiel und
- Fig. 7: eine vergrößerte Schnittdarstellung gemäß Schnittlinie VII-VII in Fig. 6.

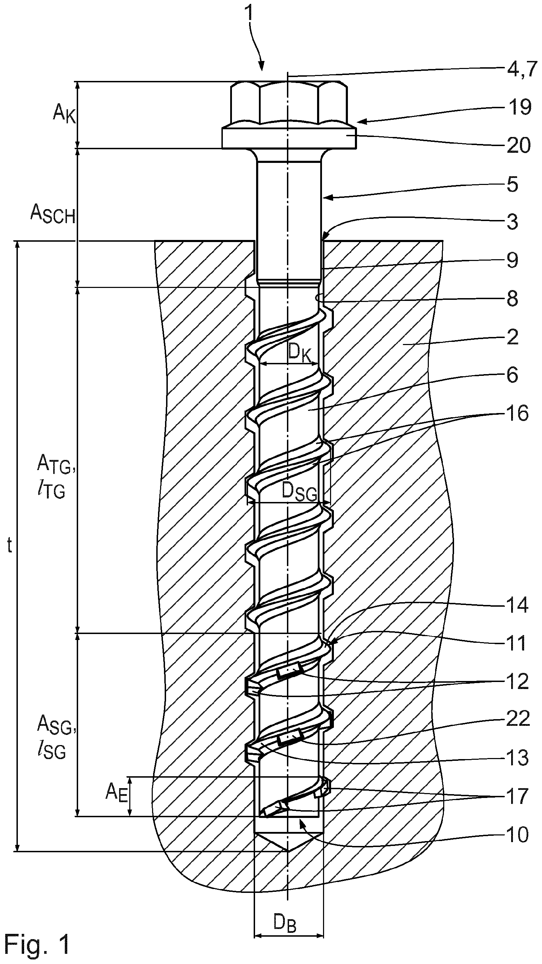

Eine in Fig. 1 im Ganzen mit 1 bezeichnete Anordnung umfasst Beton als poröses Material 2, in das ein Bohrloch 3 eingebohrt ist. Das Bohrloch 3 erstreckt sich entlang einer Bohrlochlängsachse 4 und weist eine Bohrlochtiefe t auf. Das Bohrloch 3 ist ein Sackloch. Das Bohrloch 3 weist einen Bohrlochdurchmesser DB auf.

In das Bohrloch 3 ist eine Schraube 5 eingeschraubt. Die Schraube 5 ist eine selbstschneidende Betonschraube. Die Schraube 5 weist einen im We sentlichen zylindrischen Kern 6 auf mit einer Mittellängsachse 7 und mit einem Kern-Durchmesser DK. Der Kern-Durchmesser DK ist kleiner als der Bohrloch-Durchmesser DB. Insbesondere gilt: DK ≤ 0.8 × DB, insbesondere DK ≤ 0.85 × DB, insbesondere DK ≤ 0.9 × DB, insbesondere DK ≤ 0.95 × DB, insbesondere DK ≤ 0.98 × DB. Die Schraube 5 ist in dem Bohrloch 3 konzentrisch angeordnet. Die Bohrlochlängsachse 4 und die Mittellängsachse 7 sind identisch.

Der Kern 6 weist ein Einführende 10 auf, mit dem die Schraube 5 im Bohrlochgrund angeordnet ist. Die Schraube 5 ist mit dem Einführende 10 in das Bohrloch 3 eingeführt.

Ausgehend von dem Einführende 10 erstreckt sich ein Schneidgewinde-Abschnitt A_{SG}, dem sich entlang der Mittellängsachse 7 ein Traggewinde-Abschnitt A_{TG}, ein gewindefreier Schaft-Abschnitt A_{SCH} und ein Kopf-Abschnitt A_{K} anschließen.

Entlang des Schneidgewinde-Abschnitts A_{SG} ist einstückig mit dem Kern 6 ein Schneidgewinde 11 ausgebildet. Das Schneidgewinde 11 weist eine untere Schneidflanke 13 auf, die dem Einführende 10 zugewandt ist. Das Schneidgewinde 11 weist eine obere Schneidflanke 14 auf, die dem Einführende 10 abgewandt ist. Das Schneidgewinde 11 weist einen Schneidgewinde-Durchmesser D_{SG} auf. Der Schneidgewinde-Durchmesser D_{SG} ist größer als der Bohrloch-Durchmesser D_{B}. Mit dem Schneidgewinde 11 wird eine Gewindefurche in die Bohrlochinnenwandung 8 geschnitten.

An dem Schneidgewinde 11 sind Schneidvorsprünge 12 angeordnet, die gemäß dem gezeigten Ausführungsbeispiel entlang des Umfangs der Schraube 5, insbesondere des Schneidgewindes 11 regelmäßig beabstandet zueinander angeordnet sind. Gemäß dem gezeigten Ausführungsbeispiel sind entlang des Umfangs vier Schneidvorsprünge 12 angeordnet. Bezogen auf einen Drehwinkel um die Mittellängsachse 7 beträgt der Abstand zwischen zwei benachbarten Schneidvorsprüngen 90°. Der Drehwinkelabstand zwischen zwei Schneidvorsprüngen kann auch größer als 90° oder keiner als 90° sein. Der Abstand zwischen zwei benachbarten Schneidvorsprüngen kann entlang des Umfangs auch veränderlich festgelegt sein. Im Bereich des Einführendes 10 kann der Drehwinkelabstand zwischen zwei benachbarten Schneidvorsprüngen 12 kleiner gewählt und mit zunehmendem Abstand vom Einführende 10 der Drehwinkelabstand zwischen zwei benachbarten Schneidvorsprüngen 12 größer festgelegt werden.

Gemäß dem gezeigten Ausführungsbeispiel sind die Schneidvorsprünge 12 einteilig mit dem Schneidgewinde 11 ausgeführt. Die Schneidvorsprünge 12 sind am Schneidgewinde 11 aufgewalzt.

Die Schneidvorsprünge 12 stehen jeweils am Schneidgewinde 11 in radialer Richtung bezogen auf die Mittellängsachse 7 und in axialer Richtung bezogen auf die Mittellängsachse 7 am Schneidgewinde 11 vor. Ein Verzahnungsüberstand v gegenüber dem Schneidgewinde 11 in radialer Richtung bezogen auf die Mittellängsachse 7 beträgt gemäß dem gezeigten Ausführungsbeispiel höchstens 10% der Gewindetiefe h. Als Gewindetiefe h wird die Hälfte der Differenz von Schneidgewinde-Durchmesser D_{SG} und dem Kern-Durchmesser D_{K} verstanden, also h = 0,5 × (D_{SG} - D_{K}). In Abhängigkeit der Größe des Verzahnungsüberstands v kann die Schneidleistung beeinflusst werden. Je größer der Verzahnungsüberstand v ist, desto höher ist die Schneidleistung. Der Verzahnungsüberstand v bewirkt, dass im Bereich des Schneidvorsprungs 12 ein Schneidvorsprung-Durchmesser Dsv gegeben ist, der größer ist als der Schneidgewinde-Durchmesser D_{SG}. Gemäß dem gezeigten Ausführungsbeispiel beträgt der Schneidvorsprung-Durchmesser Dsv 110% des Schneidgewinde-Durchmessers D_{SG}.

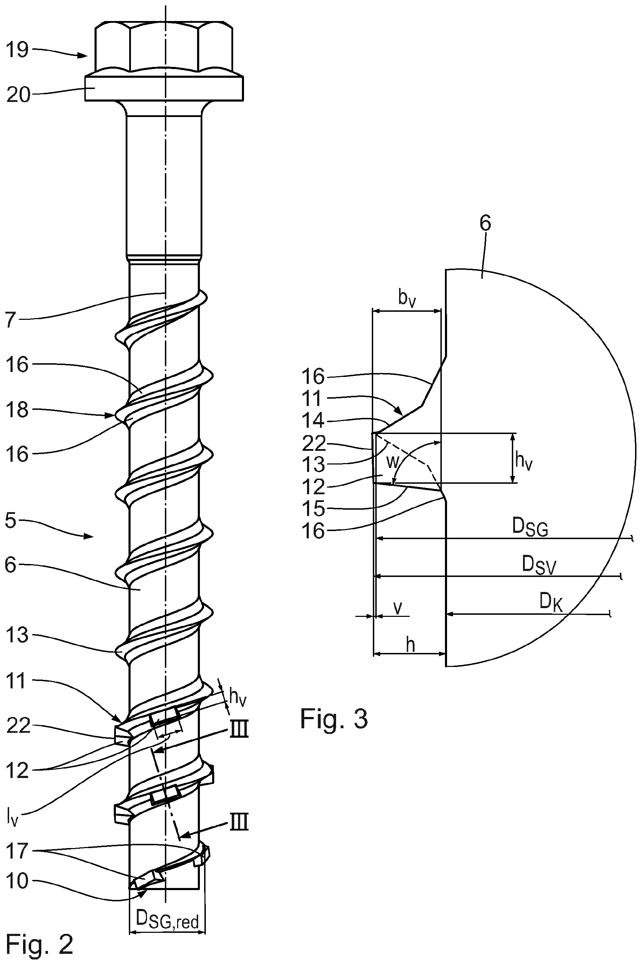

Die Schneidvorsprünge 12 sind insbesondere induktiv gehärtet. Die Schneidvorsprünge 12 sind im Wesentlichen prismaförmig ausgeführt mit einem dreiecksähnlichen Querschnitt in einer Zeichenebene gemäß Fig. 3. Mit dem korrespondierenden, ebenfalls dreiecksähnlichen Querschnitt des Schneidgewindes 11 ergibt sich ein im Wesentlichen quaderförmiger Schneidvorsprung. Senkrecht zu dieser Ebene erstrecken sich die Schneidvorsprünge 12 entlang einer Prismalängsachse. Insbesondere weisen die Schneidvorsprünge 12 keine zusätzlichen, nach außen vorragenden Schneidkanten oder nach innen, zur Mittellängsachse 7 gerichteten Schneidkerben auf.

Der Schneidvorsprung 12 ist gemäß dem gezeigten Ausführungsbeispiel ausschließlich an der unteren Schneidflanke 13 angeordnet. Ein unterer Volumenanteil des Schneidvorsprungs 12, der an der unteren Schneidflanke 13 angeordnet ist beträgt 100%. Vorteilhaft ist es, wenn der untere Volumenanteil größer ist als ein oberer Volumenanteil des Schneidvorsprungs 12, der an der oberen Schneidflanke 14 angeordnet ist.

Die obere Schneidflanke 14 ist im Wesentlichen, insbesondere vollständig, frei von Schneidvorsprüngen. Das Risiko von unkontrollierten und insbesondere unbeabsichtigten Ausbrüchen an den Gewindefurchen ist vermieden. Die axiale Haltekraft der Schraube 5 im Bohrloch 3 ist dadurch erhöht.

Der Schneidvorsprung 12 weist eine Schneidvorsprunghöhe hv auf, die entlang der Schraubenlinie konstant ausgeführt ist. Der Schneidvorsprung 12 weist eine parallel zur Schraubenlinie orientierte Schneidvorsprunglänge lv auf. Der Schneidvorsprung 12 weist eine Schneidvorsprungbreite bv auf, die im Wesentlichen senkrecht zur Schraubenlinie gerichtet ist. Die Schneidvorsprungbreite bv ist entlang der Schraubenlinie im Wesentlichen konstant ausgeführt. Die Schneidvorsprunglänge l_{V} und die Schneidvorsprungbreite bv legen eine Schneidvorsprungmantelfläche 22 fest, die im Wesentlichen konzentrisch zur Mantelfläche des Kerns 6 orientiert ist. Die Schneidvorsprungmantelfläche 22 weist eine Flächennormale auf, die im Wesentlichen radial bezüglich der Mittellängsachse 7orientiert ist.

Gemäß dem gezeigten Ausführungsbeispiel ist die Schneidvorsprunghöhe hv im Wesentlichen gleich groß wie die Schneidvorsprungbreite bv. Die Schneidvorsprunglänge l_{V} ist gemäß dem gezeigten Ausführungsbeispiel größer als die Breite bv und die Höhe hv. Die Länge lv ist insbesondere höchstens doppelt so groß und insbesondere höchstens dreimal so groß wie die Schneidvorsprunghöhe hv. Vorteilhaft ist es, wenn das Verhältnis der Schneidvorsprunghöhe hv zu der Schneidvorsprungbreite bv möglichst groß ist, insbesondere hv ≥ 0,8 × bv, insbesondere h_{V} ≥ 0,9 × b_{V}, insbesondere h_{V} ≥ mindestens 0,95 × bv, insbesondere h_{V} ≥ 1,0 × b_{V}, insbesondere h_{V} ≥ 1,05 × b_{V}, insbesondere h_{V} ≥ 1,1 × b_{V}, insbesondere h_{V} ≥ 1,2 × bv. Ein Schneidkantenwinkel w beträgt gemäß dem gezeigten Ausführungsbeispiel etwa 90°, insbesondere mehr als 80°, insbesondere mehr als 85° und insbesondere mehr als 89°. Der Schneidkanten-Winkel w ist definiert zwischen der Mantellinie des Kerns 6 und der Außenflanke 15 des Schneidvorsprungs 12.

Das Schneidgewinde 11 weist einen Schneidgewinde-Flankenwinkel auf, der gemäß dem gezeigten Ausführungsbeispiel etwa 60° beträgt.

Das Schneidgewinde 11 ist einteilig mit dem Kern 6 ausgeführt.

Einstückig mit dem Kern 6 ist ein Abstützelement 16 ausgebildet. Das Abstützelement 16 ist als Übergangsabschnitt oberhalb der oberen Schneidflanke 14 und unterhalb der unteren Schneidflanke 13 des Schneidgewindes 11 zum Kern 6 ausgebildet. Das Abstützelement 16 ist jeweils als kegelstumpfförmige Verdickung des Schneidgewindes 11 am Kern 6 ausgeführt. Das Abstützelement 16 ist als schraubenlinienförmig zumindest abschnittsweise entlang des Schneidgewinde-Abschnitts A_{SG} ausgebildet. Bezüglich der konkreten Ausgestaltung und der Vorteile des Abstützelements 16 wird auf EP 3 135 927 A1 verwiesen.

Innerhalb des Schneidgewinde-Abschnitts A_{SG} ist ein Einführabschnitt A_{E} vorgesehen, innerhalb dessen das Schneidgewinde 11 einen reduzierten Schneidgewinde-Durchmesser D_{SG, red} aufweist. Innerhalb des Einführabschnitts A_{E} nimmt der reduzierte Schneidgewinde-Durchmesser D_{SG, red} zu von einem Start-Durchmesser auf den Schneidgewinde-Durchmesser D_{SG}. Gemäß dem gezeigten Ausführungsbeispiel entspricht der Start-Durchmesser dem Kern-Durchmesser D_{K}. Der Anstieg auf den Schneid-Durchmesser D_{SG} erfolgt gemäß dem gezeigten Ausführungsbeispiel linear innerhalb einer halben Umdrehung um die Mittellängsachse 7 der Schraube 5.

Innerhalb des Einführabschnitts A_{E} sind gemäß dem gezeigten Ausführungsbeispiel zwei Einführabschnitt-Schneidvorsprünge 17 vorgesehen, die geometrisch ähnlich zu den Schneidvorsprüngen 12 ausgeführt sind, aber insbesondere eine reduzierte Schneidvorsprunghöhe hv und/oder einen reduzierten Verzahnungsüberstand v aufweisen.

Entlang des Traggewinde-Abschnitts A_{TG} ist ein Traggewinde 18 vorgesehen. Das Traggewinde 18 ist im Wesentlichen identisch zu dem Schneidgewinde 11 ausgeführt. An dem Traggewinde 18 sind keine Schneidvorsprünge 12 vorgesehen. Das Traggewinde 18 ist schneidvorsprungsfrei ausgeführt. Die geometrische Ausgestaltung des Traggewindes 18 stimmt mit der des Schneidgewindes 11 überein. Insbesondere ist ein Traggewinde-Außendurchmesser identisch mit dem Schneidgewinde-Durchmesser D_{SG}. Mit dem Traggewinde 18 ist die Schraube 5 in den Gewindefurchen, die das Schneidgewinde 11 und insbesondere die Schneidvorsprünge 12 in die Bohrlochinnenwand 8 eingeschnitten haben zuverlässig gehalten.

Der Schneidgewinde-Abschnitt A_{SG} erstreckt sich entlang der Mittellängs-achse 7 über zwei bis drei volle Umdrehungen der Gewindewendel. Die Länge l_{SG} des Schneidgewinde-Abschnitts A_{SG} entlang der Mittellängsachse 7 beträgt etwa die zweifache bis dreifache Gewindesteigung p, also 2 × p ≤ l_{SG} ≤ 3 × p.

Die Länge l_{TG} des Traggewinde-Abschnitts A_{TG} beträgt gemäß dem gezeigten Ausführungsbeispiel etwa 5 volle Gewindewendelumdrehungen, also l_{TG} = 5 × p. Die Länge l_{TG} ist größer als die Länge l_{SG}, insbesondere l_{TG} ≥ 2 × l_{SG}. Mit dem Traggewinde-Abschnitt A_{TG} ist die Schraube 5 in dem Material 2 gehalten.

An einem dem Einführende 10 gegenüberliegenden Außenende der Schraube 5 ist an dem Kopf-Abschnitt A_{K} ein Schraubenkopf 19 angeordnet, der eine Außen-Sechskantkontur mit einer einteilig daran angeformten Kopf-Scheibe 20 aufweist. Der Schraubenkopf 19 dient als Drehmomentübertragungsmittel, um ein Drehmoment um die Mittellängsachse 7 auf die Schraube 5 aufzubringen. Dazu ist es wesentlich, dass der Schraubenkopf 19 einen in einer Ebene senkrecht zur Mittellängsachse 7 unrunden Querschnitt aufweist. Der Schraubenkopf 19 kann auch als unrunde InnenKontur, beispielsweise als Innensechskant-Kontur ausgeführt sein. Auf die Kopfscheibe 20 kann auch verzichtet werden. Eine derart ausgeführte Schraube 5 kann vollständig innerhalb des Bohrlochs 3 angeordnet sein und insbesondere nicht aus dem Bohrloch 3 an dem Werkstoff 2 überstehen.

Zwischen dem Kern 6 und der Bohrlochinnenwand 8 ist ein ringförmiger Spalt 9 gebildet, dessen Spaltbreite durch die Differenz des Kern-Durchmessers D_{K} und dem Bohrloch-Durchmesser D_{B} definiert ist. Der ringförmige Spalt 9 dient zur Aufnahme von Bohrmehl. Der ringförmige Spalt 9 und insbesondere dessen Spaltbreite kann großzügig ausgeführt sein.

Der Spalt 9 kann auch zur Aufnahme einer aushärtbaren Masse dienen, um die Verankerung der Schraube 5 im Bohrloch 3 zusätzlich zu verbessern.

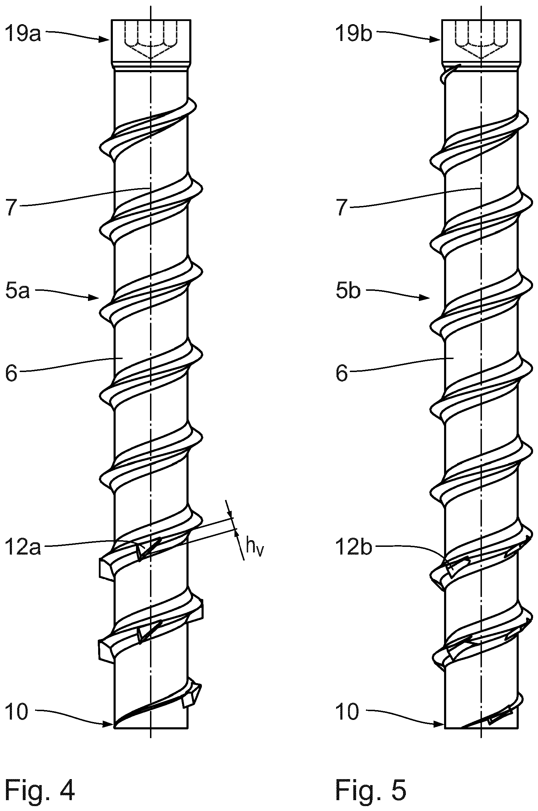

Im Folgenden wird unter Bezugnahme auf die Fig. 4 eine nicht erfindungsgemäße Ausführungsform beschrieben. Konstruktiv identische Teile erhalten dieselben Bezugszeichen wie bei der vorherigen Ausführungsform, auf deren Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber der vorherigen Ausführungsform besteht darin, dass die Schneidvorsprünge 12a entlang der Schraubenlinie des Schneidgewindes 11 keilförmig ausgeführt sind. Die Schneidvorsprunghöhe hv nimmt entlang der Schraubenlinie zum Einführende hin linear zu. Die Schneidvorsprünge 12a ermöglichen ein automatisches Selbstschärfen beim Eindrehen der Schraube. In radialer Richtung bezogen auf die Mittellängsachse 7 ist die Schneidvorsprunghöhe hv konstant.

Die Schneidvorsprunglänge lv ist im Wesentlichen identisch zu der Schneidvorsprunglänge gemäß der vorherigen Ausführungsform. Die Schneidvorsprungbreite bv ist im Wesentlichen identisch zu der gemäß der vorherigen Ausführungsform.

Bei der Schraube 5a ist der Schraubenkopf 19a als Innen-Sechskantprofil ausgeführt. Eine im Material 2 versenkte Anordnung der Schraube 5a ist dadurch vereinfacht.

Im Folgenden wird unter Bezugnahme auf Fig. 5 eine nicht erfindungsgemäße Ausführungsform beschrieben. Konstruktiv identische Teile erhalten dieselben Bezugszeichen wie bei der vorherigen Ausführungsform, auf deren Beschreibung hiermit verwiesen wird. Konstruktiv unterschiedliche, jedoch funktionell gleichartige Teile erhalten dieselben Bezugszeichen mit einem nachgestellten b.

Der wesentliche Unterschied gegenüber den vorherigen Ausführungsformen besteht darin, dass der Anstieg der Schneidvorsprunghöhe hv entlang der Schraubenlinie zum Einführende 10 hin progressiv ansteigt. Es ist auch denkbar, dass der Anstieg degressiv erfolgt.

Der Schneidvorsprung 12b weist eine dem Einführende 10 zugewandte Oberfläche auf, die gekrümmt ist. Die dem Einführende 10 zugewandte Oberfläche ist konkav geformt. Die Schneidvorsprungbreite bv und die Schneidvorsprunglänge lv sind im Wesentlichen identisch zu dem zweiten Ausführungsbeispiel gemäß Fig. 4 ausgeführt.

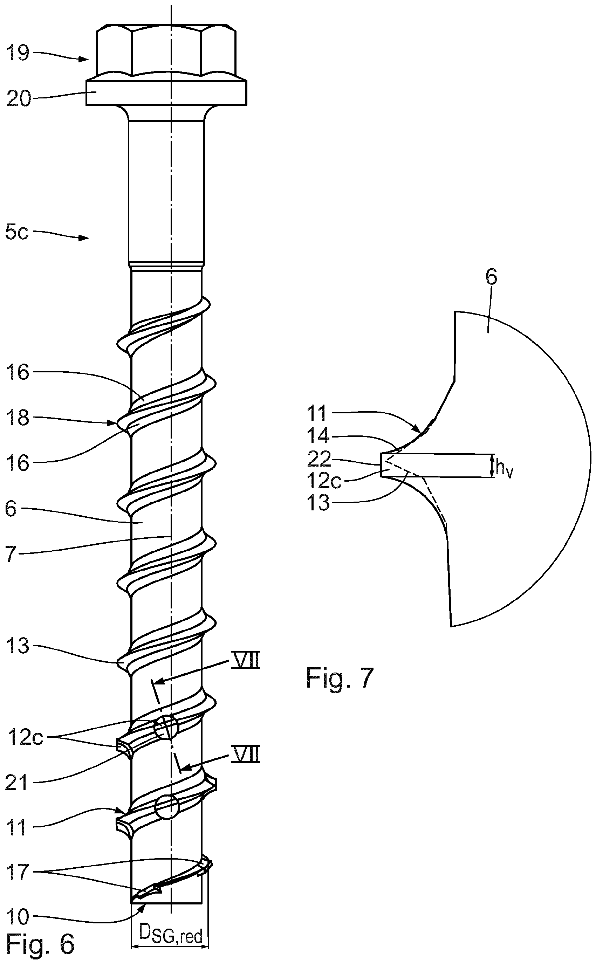

Im Folgenden wird unter Bezugnahme auf Fig. 6 und 7 ein erfindungsgemäßes Ausführungsbeispiel beschrieben. Konstruktiv identische Teile erhalten dieselben Bezugszeichen wie bei den vorherigen Ausführungsformen, auf deren Beschreibung hiermit verwiesen wird. Konstruktiv unterschiedliche, jedoch funktionell gleichartige Teile erhalten dieselben Bezugszeichen mit einem nachgestellten c.

Ein wesentlicher Unterschied gegenüber den vorherigen Ausführungsformen besteht darin, dass die Schneidvorsprünge 12c am Schneidgewinde 11 als Schweißpunkt 21 aufgetragen sind. Die Herstellung der Schraube 5b ist flexibel möglich. Für die Herstellung der Schraube 5b, insbesondere in kleinen Stückzahlen, können gemäß dem Stand der Technik existierende Schraubenrohlinge verwendet werden und die Schweißpunkte angebracht werden. Insbesondere die Anordnung der Schneidvorsprünge 12c am Schneidgewinde 11, also die Positionierung der Schweißpunkte am Schraubenrohling, ist flexibel möglich. Es ist möglich, aus einem Schraubenrohling eine an spezielle Anforderungen individuell angepasste Betonschraube herzustellen. Die Schneidleistung der Schraube kann an einen zu bearbeitenden Untergrund unmittelbar angepasst werden.

In Umfangsrichtung ist die Schneidvorsprunghöhe hv konstant. In radialer Richtung bezogen auf die Mittellängsachse 7 ist die Schneidvorsprunghöhe hv nicht konstant. Zum Kern 6 hin nimmt die Schneidvorsprunghöhe hv zu. Der Schneidvorsprung 12c weist eine breite Basis auf, mit der der Schneidvorsprung 12c am Kern 6 befestigt ist. Der Schneidvorsprung 12c ist besonders stabil.

Die Kontur des Schneidvorsprungs 12c an der unteren Schneidflanke 13 ist konvex ausgeführt und weist eine Krümmung auf, die im Wesentlichen konstant ist. Insbesondere ist die Krümmung konstant.

## Patentansprüche

1. Schraube zum Einschrauben in ein Bohrloch (3) in einem Material (2), wobei die Schraube (5; 5a; 5b; 5c) umfasst
a. einen Kern (6) mit einem Einführende (10) und mit einer Mittellängsachse (7),
b. ein sich vom Einführende (10) als Schraubenlinie erstreckendes Schneidgewinde (11) zum Einschneiden in das Material (2),
i. wobei das Schneidgewinde (11) einen Schneidgewinde-Durchmesser (D_{SG}) aufweist,
ii. wobei das Schneidgewinde (11) eine dem Einführende (10) zugewandte untere Schneidflanke (13) und eine dem Einführende (10) abgewandte obere Schneidflanke (14) aufweist,
c. mindestens einen am Schneidgewinde (11) vorstehenden Schneidvorsprung (12; 12a; 12b; 12c),
der bezüglich der Schraubenlinie unsymmetrisch ausgeführt ist, **dadurch gekennzeichnet, dass**
ein an der unteren Schneidflanke (13) angeordneter unterer Volumenanteil des mindestens einen Schneidvorsprungs (12; 12a; 12b; 12c) größer ist als ein an der oberen Schneidflanke (14) angeordneter Volumenanteil.

2. Schraube gemäß Anspruch 1, **dadurch gekennzeichnet, dass** im Bereich des mindestens einen Schneidvorsprungs (12; 12a; 12b; 12c) ein Schneidvorsprung-Durchmesser (Dsv) vorgesehen ist, wobei gilt:
D_{SV} ≥ D_{SG}, insbesondere D_{SV} ≤ 1,1 × D_{SG}, insbesondere
D_{SV} ≤ 1,05 × D_{SG} und insbesondere D_{SV} ≤ 1,01 × D_{SG}.

3. Schraube gemäß einem der vorstehenden Ansprüche, **gekennzeichnet durch** einen am Einführende (10) angeordneten Einführabschnitt (A_{E}) des Schneidgewindes (11), in dem das Schneidgewinde (11) einen reduzierten Schneidgewinde-Durchmesser (D_{SG, red}) aufweist, der insbesondere von einem Start-Durchmesser auf den Schneidgewinde-Durchmesser (D_{SG}) ansteigt, wobei der Anstieg insbesondere linear erfolgt.

4. Schraube gemäß Anspruch 3, **dadurch gekennzeichnet, dass** innerhalb des Einführabschnitts (A_{E}) mindestens ein Einführabschnitt-Schneidvorsprung (17) vorgesehen ist.

5. Schraube gemäß einem der vorstehenden Ansprüche, **dadurch gekennzeichnet, dass** eine sich quer, insbesondere senkrecht, zur Schraubenlinie erstreckende Schneidvorsprunghöhe (hv) entlang der Schraubenlinie konstant ist.

6. Schraube gemäß einem der Ansprüche 1 bis 4, **dadurch gekennzeichnet, dass** eine sich quer, insbesondere senkrecht, zur Schraubenlinie erstreckende Schneidvorsprunghöhe (hv) entlang der Schraubenlinie zum Einführende (10) hin zunimmt.

7. Schraube gemäß einem der vorstehenden Ansprüche, **dadurch gekennzeichnet, dass** eine sich quer, insbesondere senkrecht, zur Schraubenlinie erstreckende Schneidvorsprunghöhe (hv) in radialer Richtung bezogen auf die Mittellängsachse (7) im Wesentlichen konstant ist.

8. Schraube gemäß einem der Ansprüche 1 bis 6, **dadurch gekennzeichnet, dass** eine sich quer, insbesondere senkrecht, zur Schraubenlinie erstreckende Schneidvorsprunghöhe (hv) in radialer Richtung bezogen auf die Mittellängsachse (7) zum Kern (6) hin zunimmt.

9. Schraube gemäß einem der vorstehenden Ansprüche, **dadurch gekennzeichnet, dass** das Volumenverhältnis des unteren Volumenanteils zu dem oberen Volumenanteil mindestens 1,5:1 beträgt.

10. Schraube gemäß einem der Ansprüche 5 bis 8, **dadurch gekennzeichnet, dass** eine sich entlang der Schraubenlinie erstreckende Schneidvorsprungslänge (lv) vorgesehen ist, wobei gilt: lv ≤ 3 × hv, insbesondere l_{V} ≤ 2,5 × h_{V}, insbesondere l_{V} ≤ 2,0 × h_{V}, insbesondere l_{V} ≤ 1,5 × hv.

11. Schraube gemäß einem der Ansprüche 5 bis 8, **dadurch gekennzeichnet, dass** eine quer zur Schraubenlinie, insbesondere radial zur Mittellängsachse (7), orientierte Schneidvorsprungsbreite (bv), wobei insbesondere gilt: 0,75 × h_{V} ≤ bv ≤ 1,25 × hv, insbesondere 0,8 × h_{V} ≤ bv ≤ 1,2 × h_{V}, insbesondere 0,9 × h_{V} ≤ bv ≤ 1,1 × h_{V} und insbesondere bv = hv.

12. Anordnung mit einem Material (2), insbesondere Beton, insbesondere Porenbeton, das ein Bohrloch (3) aufweist, in das eine Schraube (5; 5a; 5b; 5c) gemäß einem der vorstehenden Ansprüche eingeschraubt ist.

## Claims

1. A screw for screwing into a borehole (3) in a material (2), the screw (5; 5a; 5b; 5c) comprising
a. a core (6) having an insertion end (10) and having a central longitudinal axis (7),
b. a cutting thread (11) extending from the insertion end (10) as a helical line for cutting into the material (2),
i. wherein the cutting thread (11) has a cutting thread diameter (D_{SG}),
ii. wherein the cutting thread (11) has a lower cutting flank (13) facing the insertion end (10) and an upper cutting flank (14) facing away from the insertion end (10),
c. at least one cutting projection (12; 12a; 12b; 12c) projecting from the cutting thread (11),
which is asymmetrical with respect to the helical line, **characterized in that**
a lower volume fraction of the at least one cutting projection (12; 12a; 12b; 12c) arranged at the lower cutting flank (13) is larger than a volume fraction arranged at the upper cutting flank (14).

2. A screw according to claim 1, **characterized in that** a cutting projection diameter (Dsv) is provided in the region of the at least one cutting projection (12; 12a; 12b; 12c), wherein Dsv ≥ D_{SG}, in particular Dsv ≤ 1.1 × DSG, in particular Dsv ≤ 1.05 × D_{SG} and in particular Dsv ≤ 1.01 × D_{SG}.

3. A screw according to any one of the preceding claims, **characterized by** an insertion portion (A_{E}) of the cutting thread (11) arranged at the insertion end (10), in which the cutting thread (11) has a reduced cutting thread diameter (D_{SG, red}), which increases in particular from a starting diameter to the cutting thread diameter (D_{SG}), the increase being in particular linear.

4. A screw according to claim 3, **characterized in that** at least one insertion portion cutting projection (17) is provided within the insertion portion (A_{E}).

5. A screw according to any one of the preceding claims, **characterized in that** a cutting projection height (hv) extending transversely, in particular perpendicularly, to the helical line is constant along the helical line.

6. A screw according to any one of claims 1 to 4, **characterized in that** a cutting projection height (hv) extending transversely, in particular perpendicularly, to the helical line increases along the helical line towards the insertion end (10).

7. A screw according to any one of the preceding claims, **characterized in that** a cutting projection height (hv) extending transversely, in particular perpendicularly, to the helical line is substantially constant in the radial direction with respect to the central longitudinal axis (7).

8. A screw according to any one of claims 1 to 6, **characterized in that** a cutting projection height (hv) extending transversely, in particular perpendicularly, to the helical line increases in the radial direction relative to the central longitudinal axis (7) towards the core (6).

9. A screw according to any one of the preceding claims, **characterized in that** the volume ratio of the lower volume fraction to the upper volume fraction is at least 1.5:1.

10. A screw according to any one of claims 5 to 8, **characterized in that** a cutting projection length (lv) extending along the helical line is provided, wherein: l_{V} ≤ 3 × hv, in particular lv ≤ 2.5 × hv, in particular lv ≤ 2.0 × hv, in particular lv ≤ 1.5 × h_{V}.

11. A screw according to any one of claims 5 to 8, **characterized in that** a cutting projection width (bv) oriented transversely to the screw line, in particular radially to the central longitudinal axis (7), wherein in particular: 0.75 × h_{V} ≤ bv ≤ 1.25 × hv, in particular 0.8 × h_{V} ≤ bv ≤ 1.2 × hv, in particular 0.9 × h_{V} ≤ bv ≤ 1.1 × hv and in particular bv = hv.

12. An assembly comprising a material (2), in particular concrete, in particular cellular concrete, which has a borehole (3) into which a screw (5; 5a; 5b; 5c) is screwed according to any one of the preceding claims.

## Revendications

1. Vis destinée à être vissée dans un trou de forage (3) dans un matériau (2), la vis (5 ; 5a ; 5b ; 5c) comprenant
a. un noyau (6) pourvu d'une extrémité d'insertion (10) et pourvu d'un axe longitudinal central (7),
b. un filetage de coupe (11) s'étendant depuis l'extrémité d'insertion (10) sous forme d'hélice pour couper dans le matériau (2),
i. le filetage de coupe (11) ayant un diamètre de filetage de coupe (D_{SG}),
ii. le filetage de coupe (11) ayant un flanc de coupe inférieur (13) faisant face à l'extrémité d'insertion (10) et un flanc de coupe supérieur (14) détourné de l'extrémité d'insertion (10),
c. au moins une saillie de coupe (12 ; 12a ; 12b ; 12c) faisant saillie du filetage de coupe (11),
qui est asymétrique par rapport à l'hélice,
**caractérisée en ce qu'**
une fraction volumique inférieure de l'au moins une saillie de coupe (12 ; 12a ; 12b ; 12c) disposée sur le flanc de coupe inférieur (13) est supérieure à une fraction volumique disposée sur le flanc de coupe supérieur (14).

2. Vis selon la revendication 1, **caractérisée en ce qu'**un diamètre de saillie de coupe (Dsv) est prévu dans la zone de l'au moins une saillie de coupe (12 ; 12a ; 12b ; 12c), dans laquelle : Dsv ≥ D_{SG}, en particulier Dsv ≤ 1,1 × D_{SG}, en particulier Dsv ≤ 1,05 × D_{SG} et en particulier Dsv ≤ 1,01 × D_{SG}.

3. Vis selon l'une quelconque des revendications précédentes, **caractérisée par une** section d'insertion (A_{E}) du filetage de coupe (11) disposée à l'extrémité d'insertion (10), dans laquelle le filetage de coupe (11) présente un diamètre de filetage de coupe réduit (D_{SG}, _{red}), qui augmente en particulier depuis un diamètre de départ au diamètre de filetage de coupe (D_{SG}), l'augmentation étant en particulier linéaire.

4. Vis selon la revendication 3, **caractérisée en ce qu'**au moins une saillie de coupe de section d'insertion (17) est prévue à l'intérieur de la section d'insertion (A_{E})

5. Vis selon l'une quelconque des revendications précédentes, **caractérisée en ce qu'**une hauteur de saillie de coupe (hv) s'étendant transversalement, en particulier perpendiculairement, à l'hélice, est constante le long de l'hélice.

6. Vis selon l'une quelconque des revendications 1 à 4, **caractérisée en ce qu'**une hauteur de saillie de coupe (hv) s'étendant transversalement, en particulier perpendiculairement, à l'hélice, augmente le long de l'hélice vers l'extrémité d'insertion (10).

7. Vis selon l'une quelconque des revendications précédentes, **caractérisée en ce qu'**une hauteur de saillie de coupe (hv) s'étendant transversalement, en particulier perpendiculairement, à l'hélice, est sensiblement constante dans la direction radiale par rapport à l'axe longitudinal central (7).

8. Vis selon l'une quelconque des revendications 1 à 6, **caractérisée en ce qu'**une hauteur de saillie de coupe (hv) s'étendant transversalement, en particulier perpendiculairement, à l'hélice, augmente dans la direction radiale par rapport à l'axe longitudinal central (7) vers le noyau (6).

9. Vis selon l'une quelconque des revendications précédentes, **caractérisée en ce que** le rapport volumique de la fraction volumique inférieure à la fraction volumique supérieure est d'au moins 1,5 : 1.

10. Vis selon l'une quelconque des revendications 5 à 8, **caractérisée en ce qu'**une longueur de saillie de coupe (lv) s'étendant le long de l'hélice, est prévue, dans laquelle : lv ≤ 3 × hv, en particulier lv ≤ 2,5 × hv, en particulier lv ≤ 2,0 × hv, en particulier lv ≤ 1,5 × hv.

11. Vis selon l'une quelconque des revendications 5 à 8, **caractérisée par** une largeur de saillie de coupe (bv) orientée transversalement à l'hélice, en particulier radialement à l'axe longitudinal central (7), dans laquelle en particulier : 0,75 × h_{V} ≤ bv ≤ 1,25 × hv, en particulier 0,8 × hv ≤ bv ≤ 1,2 × hv, en particulier 0,9 × h_{V} ≤ bv ≤ 1,1 × h_{V} et en particulier bv = h_{V}.

12. Agencement pourvu d'un matériau (2), en particulier du béton, en particulier du béton cellulaire, qui présente un trou de forage (3) dans lequel est vissée une vis (5 ; 5a ; 5b ; 5c) selon l'une quelconque des revendications précédentes.
